# EUROPÄISCHE PATENTSCHRIFT

(11) **EP 3 870 405 B1**
(45) Veröffentlichungstag und Bekanntmachung des Hinweises auf die Patenterteilung: **22.06.2022**
(21) Anmeldenummer: 19802045.5
(22) Anmeldetag: 10.10.2019
(51) Int. Cl.: B23Q 7/04

(54) **VORRICHTUNG ZUM BEARBEITEN EINES WERKSTÜCKS**
DEVICE FOR MACHINING A WORKPIECE
DISPOSITIF POUR L'USINAGE D'UNE PIÈCE

(30) Priorität: 26.10.2018 DE 102018008428
(43) Veröffentlichungstag der Anmeldung: 01.09.2021
(73) Patentinhaber: zwo17 GmbH & Co. KG, 85229 Markt Indersdorf (DE)
(72) Erfinder: EUGLER, Norbert, 85757 Karlsfeld (DE)
(74) Vertreter: Castell, Klaus
(86) Internationale Anmeldenummer: PCT/DE2019/000261
(87) Internationale Veröffentlichungsnummer: WO 2020/083416

(56) Entgegenhaltungen:
- EP-A1- 2 546 027
- WO-A1-02/100600
- WO-A1-2015/003829
- WO-A1-2015/173239
- DE-A1-102009 025 811
- DE-U1-202013 105 910
- JP-A- H0 839 233
- US-A- 4 741 568
- US-A1- 2018 085 916
- US-B2- 6 857 174
- US-B2- 8 123 234
- Anonymous: "Weltneuheit: Mechanische Schraubstöcke automatisieren! - SHERPA", , 12 January 2019 (2019-01-12), XP055727660, Retrieved from the Internet: URL:https://www.sherpa-robotics.com/de/spi ndelantrieb/ [retrieved on 2020-09-04]

## Beschreibung

Die Erfindung betrifft eine Vorrichtung zum Bearbeiten eines Werkstücks, eine Anordnung aus einer derartigen Vorrichtung und einer Spannvorrichtung und ein Verfahren zum Bearbeiten eines Werkstücks mit einer derartigen Anordnung.

Insbesondere betrifft die Erfindung eine Vorrichtung zum Bearbeiten eines Werkstücks mit einem Roboter, der einen Arm aufweist, wobei der Roboter das Werkstück hält und bewegt, wobei der Roboter eine Antriebseinheit aufweist, die dazu geeignet ist, das Werkstück in einer Spannvorrichtung zu befestigen. Es ist bekannt, mit einem Roboter ein Werkstück zu halten und an einen Ort zu bewegen, an dem das Werkstück beispielsweise bearbeitet werden kann. Hierfür ist in der Regel am Arm eines Roboters eine Greifeinrichtung vorgesehen. Solche Vorrichtungen sind zum Beispiel aus den Druckschriften WO2015/003829A1, DE102009025811A1, WO2015/173239A1 so wie JPH0839233A bekannt.

Der Erfindung liegt die Aufgabe zugrunde, eine derartige Vorrichtung weiterzuentwickeln.

Diese Aufgabe wird mit einer gattungsgemäßen Vorrichtung gelöst, bei der an dem Arm des Roboters gleichzeitig eine Antriebseinheit und mindestens ein Greifer angeordnet sind, um sie nacheinander zu benutzen, mindestens ein Greifer seitlich der Antriebseinheit angeordnet ist und Greifer und Antriebseinheit orthogonal zueinander angeordnet sind, wobei die Antriebseinheit jeweils auf einer Seite eines Schraubwerkzeugs Stifte aufweist, die so ausgebildet sind, dass sie mit Bohrungen an der Spannvorrichtung fluchtend angeordnet werden können, oder in der Antriebseinheit Bohrungen vorgesehen sind, die mit Stiften in der Spannvorrichtung zusammenwirken, sodass die Stifte in die Bohrungen gleiten und die Antriebseinheit relativ zur Spannvorrichtung festhalten, um den Roboterarm zu entlasten.

Es gibt zwar Spannvorrichtungen, um Werkstücke zu befestigen und es gibt Roboter, die ein Werkstück an einen bestimmten Ort bewegen. Der Fachmann für den Roboter hat die Aufgabe, das Werkstück zu positionieren um es zu bearbeiten. Gehalten wird das Werkstück in der Regel durch eine Spannvorrichtung, die manuell oder automatisch betätigt wird.

Ausgehend von diesem Stand der Technik hat der Erfinder erkannt, dass der Roboter auch so ausgerüstet werden kann, dass er eine mechanische Spannvorrichtung bedient und somit nicht nur das Werkstück positioniert, sondern auch einspannt.

Um dies auf einfache Art und Weise zu realisieren, wird vorgeschlagen, dass der Roboter einen Greifer und eine Antriebseinheit aufweist. Außerdem weist der Roboter einen Arm auf, an dem die Antriebseinheit und mindestens ein Greifer angeordnet sind.

Dabei können am Arm gleichzeitig Greifer und Antriebseinheit befestigt sein und nacheinander benutzt werden.

Da die Antriebseinheit ein Schraubwerkzeug aufweist, kann eine Spannvorrichtung mit der Antriebseinheit schraubend bedient werden, um das Werkstück in der Spannvorrichtung festzuhalten.

Um insbesondere am Arm eines Roboters auf einfache Art und Weise Greifer und Antriebseinheit zu positionieren, wird vorgeschlagen, dass mindestens ein Greifer seitlich der Antriebseinheit angeordnet ist.

Dabei sind Greifer und Antriebseinheit orthogonal zueinander angeordnet.

Die der Erfindung zugrundeliegende Aufgabe wird auch von einer Anordnung aus einer derartigen Vorrichtung und einer Spannvorrichtung gelöst, bei der die Spannvorrichtung mechanisch ohne Antrieb ausgebildet ist und die Spannvorrichtung und ein unbewegtes Teil der Antriebseinheit formschlüssig miteinander in Verbindung stehen. Dies hat den Vorteil, dass eine einfache Spannvorrichtung verwendet werden kann, die nicht manuell vom Nutzer bedient werden muss, sondern zumindest auch durch einen Roboter bedient werden kann.

Eine derartige Spannvorrichtung kann auf einfache Art und Weise auch so ausgestattet sein, dass sie mehrere Werkstücke aufnimmt, die zusammen eingespannt sind.

Um auf einfache Art und Weise die Spannvorrichtung mittels einer Antriebseinheit zu bedienen, wird vorgeschlagen, dass die Spannvorrichtung und ein bewegtes Teil der Antriebseinheit formschlüssig miteinander in Verbindung stehen.

Wenn die Antriebseinheit am Roboterarm über ein Schraubwerkzeug ein Drehmoment auf die Spannvorrichtung überträgt, um an der Spannvorrichtung einen Einspannvorgang zu realisieren, besteht die Gefahr, dass mit der Drehbewegung die Antriebseinheit gedreht wird. Daher ist es vorteilhaft, wenn die Spannvorrichtung und ein unbewegtes Teil der Antriebseinheit formschlüssig miteinander in Verbindung stehen. Dies ermöglicht es, beispielsweise mit Zapfen am Roboterarm, die in Ausnehmungen an der Spannvorrichtung eingreifen, die den Roboterarm relativ zur Spannvorrichtung festzuhalten und mit einem Schraubwerkzeug ein Element an der Spannvorrichtung zu drehen, um das Werkstück einzuspannen. Die formschlüssige Verbindung erlaubt es dabei, den Roboterarm mit der Spannvorrichtung zu verbinden, um ein Drehmoment wirken zu lassen und anschließend den Roboterarm von der Spannvorrichtung wieder abzuziehen.

Bei einer Anordnung aus einer Antriebseinheit und einer Spannvorrichtung können die Spannvorrichtung und ein bewegtes Teil der Antriebseinheit formschlüssig miteinander in Verbindung stehen und die Antriebseinheit lösbar an der Spannvorrichtung befestigt sein. In diesem Fall ist die Antriebseinheit vorzugsweise relativ zur Spannvorrichtung stationär fixiert angeordnet und sie kann auf einfache Art und Weise, beispielsweise durch eine Schraubverbindung, von der Spannvorrichtung wieder entfernt werden. Ein bewegtes Teil der Antriebseinheit ist dabei formschlüssig mit der Spannvorrichtung verbunden, um die Spannvorrichtung automatisch zu bedienen. Dabei kann die Antriebseinheit durch den Roboterarm oder durch eine gemeinsame Steuerung ausgelöst werden, um das Werkstück in der Spannvorrichtung einzuspannen oder zu lösen.

Verfahrensmäßig wird die der Erfindung zugrundeliegende Aufgabe mit einem Verfahren zum Bearbeiten eines Werkstücks mit einer derartigen Anordnung gelöst, bei dem das Werkstück durch den Roboter in der Spannvorrichtung abgelegt und anschließend bearbeitet wird. Erfindungsgemäß wird das Werkstück mit dem Roboter in der Spannvorrichtung befestigt. Vorzugsweise kann das Werkstück mit dem Roboter auch aus der Spannvorrichtung wieder gelöst werden.

Beim Festdrehen des Vierkants an der Spannvorrichtung spannt die Antriebseinheit das Werkstück und sie ist unmittelbar danach so verspannt, dass sich der Adapter nicht mehr von der Spannvorrichtung abziehen lässt. Daher wird vorgeschlagen, dass mit etwas Gegendrehen - ohne dass sich die Spannvorrichtung wieder löst - die Verspannung des Adapters reduziert wird, sodass er einfach vom Vierkant abgezogen werden kann.

Erfindungsgemäße Ausführungsbeispiele sind in der Zeichnung an Hand von schematischen Ansichten dargestellt und werden im Folgenden näher beschrieben.

Es zeigt
- Figur 1: einen Roboterarm mit zwei Greifern und versetzt dazu angeordneter Antriebseinheit und eine Spannvorrichtung mit einem Werkstück,
- Figur 2: einen Roboterarm mit zwei Greifern und einer dazwischen angeordneten Antriebseinheit und eine Spannvorrichtung mit zwei eingespannten Werkstücken,
- Figur 3: einen Roboterarm mit seitlich angeordneter Antriebseinheit und seitlich angeordnetem Greifer und eine Spannvorrichtung mit einem eingespannten Werkstück,
- Figur 4: einen Roboterarm mit gegenüberliegend einem Greifer und einer Antriebseinheit und eine Spannvorrichtung mit Spannpratzen,
- Figur 5: einen Roboterarm mit einer Spannvorrichtung mit zwei Haltestiften und eine Spannvorrichtung mit zwei Bohrungen zur Drehmomentabstützung,
- Figur 6: einen Roboterarm mit einer Antriebseinheit und unterschiedlichen auswechselbaren Adaptern,
- Figur 7: einen Roboterarm mit einer Antriebseinheit und gegen Federkraft eingedrücktem Adapter und eine Spannvorrichtung mit einem Werkstück,
- Figur 8: einem Roboterarm mit an der Spannvorrichtung eingreifendem Adapter und entspannter Feder,
- Figur 9: eine Spannvorrichtung mit einer an der Spannvorrichtung angeschraubten Antriebseinheit und
- Figur 10: eine Spannvorrichtung gemäß Figur 9 jedoch mit Akku als Stromversorgung.

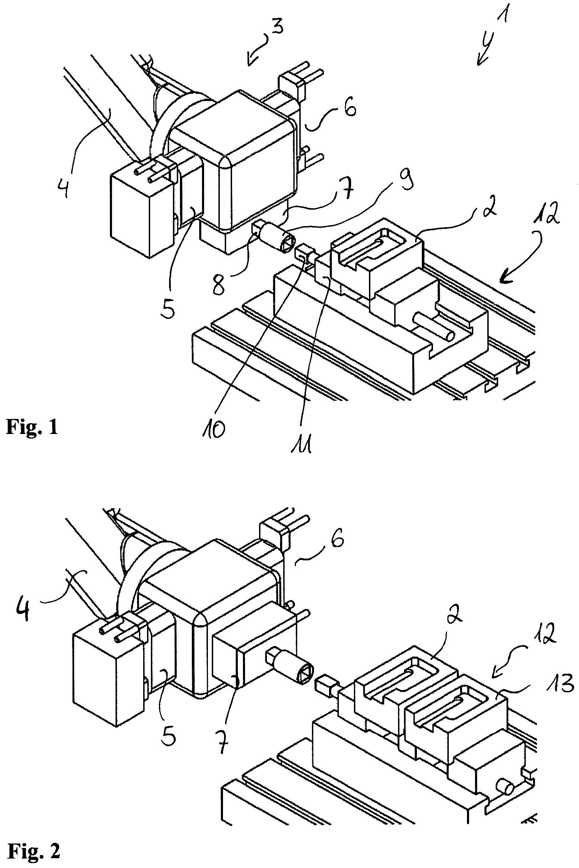

Die in Figur 1 gezeigte Vorrichtung 1 dient zum Bearbeiten eines Werkstücks 2 mit einem Roboter 3, von dem nur der Roboterarm 4 mit zwei Greifern 5 und 6 und einer Antriebseinheit 7 gezeigt ist. Die Antriebseinheit 7 weist ein Schraubwerkzeug 8 auf, das mit einem Adapter 9 formschlüssig in Verbindung steht.

Der Adapter 9 ist dazu ausgebildet, als bewegtes Teil der Antriebseinheit formschlüssig mit einem Vierkant 10 in Verbindung gebracht zu werden, um ein Drehmoment auf die Einspannmechanik 11 der Spannvorrichtung 12 auszuüben. Eine Drehbewegung des Vierkants 10 in einer Richtung führt dabei zu einem Einspannen des Werkstücks 2, während eine Bewegung in der entgegengesetzten Richtung das Werkstück 2 aus der Spannvorrichtung 12 löst.

Dabei kann der Roboterarm 4 neben den gegenüberliegend angeordneten Armen 5 und 6 auch stirnseitig die Antriebseinheit 7 aufweisen und die Spannvorrichtung 12 kann auch mehrere Werkstücke 2, 13 zusammen einspannen (vgl. Figur 2).

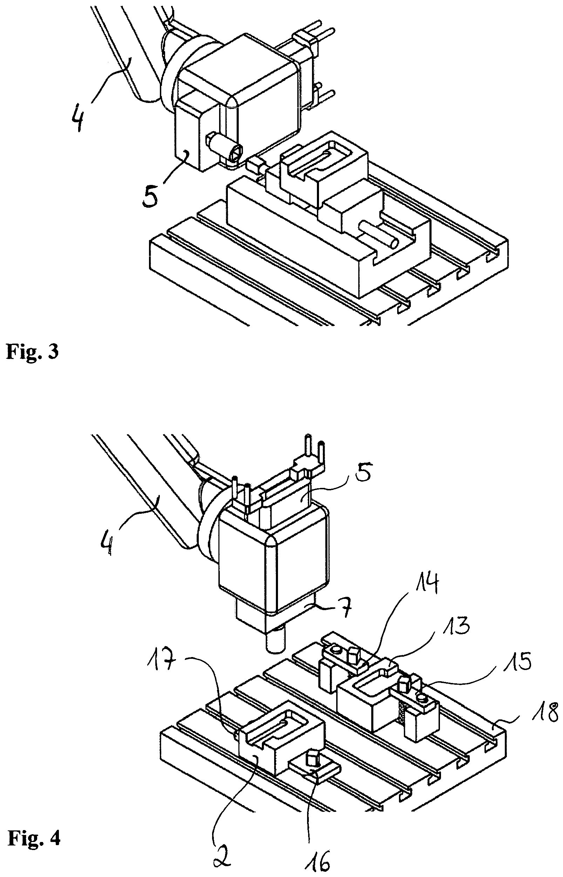

Je nach Ausführungsvariante kann die Antriebseinheit 5 auch, wie in Figur 3 gezeigt, seitlich am Roboterarm 4 angeordnet werden.

Die Figur 4 zeigt, wie an einem Roboterarm 4 gegenüberliegend ein Greifer 5 und eine Antriebseinheit 7 angeordnet werden können. Hier werden die Werkstücke 2 und 13 jeweils mit Spannpratzen 14, 15, 16, 17 auf einer Spannplatte 18 gehalten.

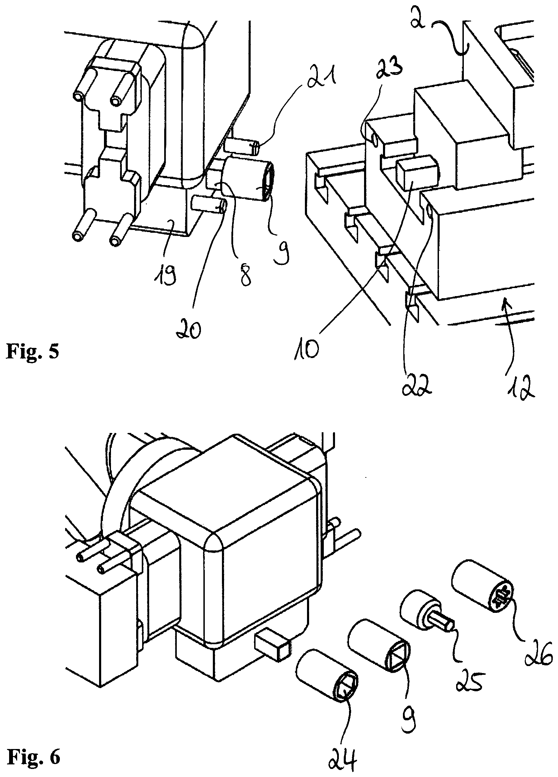

Die in Figur 5 gezeigte Antriebseinheit 19 weist jeweils auf einer Seite des Schraubwerkzeugs 8 Stifte 20 bzw. 21 auf, die so ausgebildet sind, dass sie mit Bohrungen 22, 23 an der Spannvorrichtung 12 fluchtend angeordnet werden können, sodass die Stifte 20, 21 in die Bohrungen 22, 23 gleiten und die Antriebseinheit 19 relativ zur Spannvorrichtung 12 festhalten, um den Roboterarm zu entlasten. In der Figur 5 ist gezeigt, dass die Stifte in der Antriebseinheit und die Bohrungen in der Spannvorrichtung vorgesehen sind. In entsprechender Ausführung können auch in der Antriebseinrichtung Bohrungen vorgesehen sein, die mit Stiften in der Spannvorrichtung zusammenwirken. Dadurch wird vermieden, dass beim Eingriff des Adapters 9 am Vierkant 10 ein Drehmoment auf die Antriebseinheit 19 ausgeübt wird. Der Adapter 9 dreht nur den Vierkant 10, um das Werkstück 2 in der Spannvorrichtung 12 einzuspannen.

Hierfür kann, wie in Figur 6 gezeigt, der Adapter als Vierkantadapter 9 oder mit anderen Adapterprofilen 24, 25 und 26 ausgebildet sein. Diese Profile sind nur Beispiele, für die jeweils entsprechende Profile an der Spannvorrichtung vorgesehen sein können.

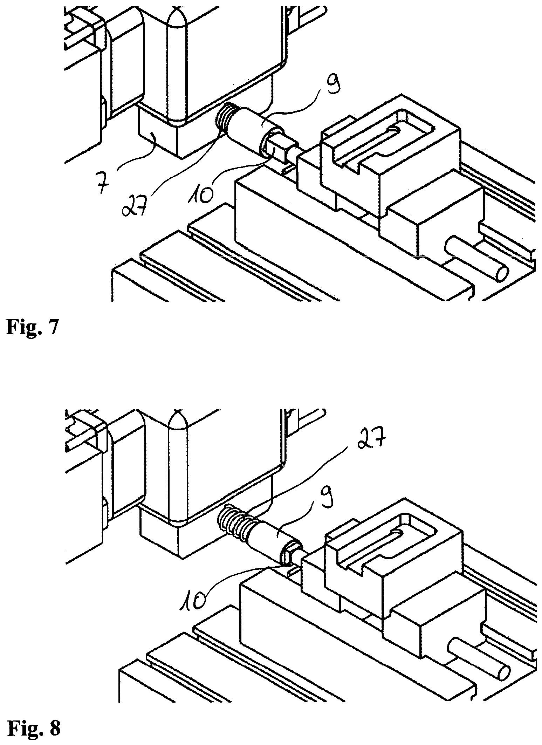

Es ist nicht gewährleistet, dass beim Einsetzen des Adapters 9 am Vierkant 10 dieser Adapter genau auf den Vierkant passt (vgl. Figur 7). Daher ist eine Feder zwischen Adapter 9 und Antriebseinheit 7 vorgesehen, die es ermöglicht, dass bei einer geringen Bewegung des Adapters 9 relativ zum Vierkant 10 der Adapter 9 mit dem Vierkant 10, wie in Figur 8 gezeigt, in Eingriff gerät. Dabei entspannt sich die Feder 27, die den Adapter 9 zum Vierkant 10 drückt.

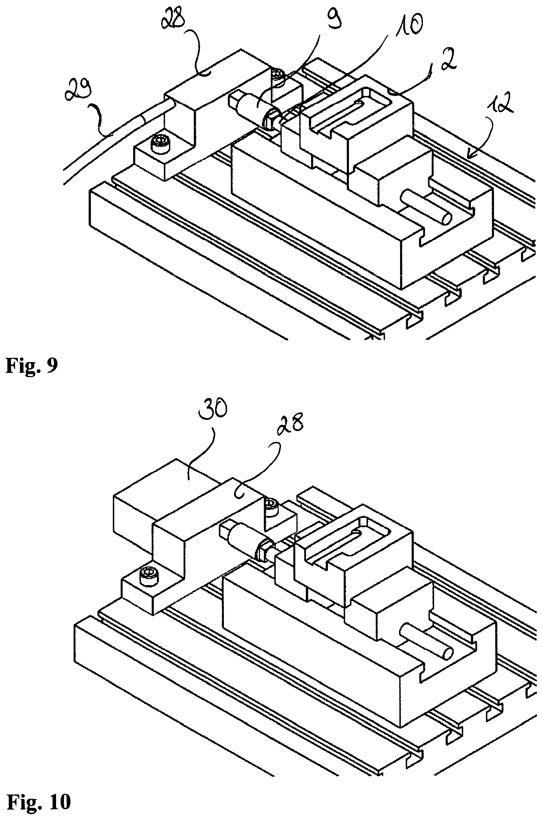

Die in Figur 9 gezeigte Spannvorrichtung 12 hat eine lösbar an der Spannvorrichtung 12 befestigte Antriebseinheit 28, die über ein Kabel 29 mit Strom versorgt wird, um mit dem Adapter 9 den Vierkant 10 zu drehen, um das Werkstück 2 in der Spannvorrichtung 12 einzuspannen. Als Alternative zu einem elektrischen Antrieb kann auch ein pneumatischer oder ein hydraulischer Antrieb vorgesehen werden.

Die Figur 10 zeigt, dass Anstelle des in Figur 9 gezeigten Kabels 29 auch ein Akku 30 eingesetzt werden kann, um die Antriebseinheit 28 mit Strom zu versorgen. In diesem Fall ist die Antriebseinheit 28 ferngesteuert und insbesondere funkferngesteuert.

Die Antriebseinheit 28 kann wie in den Figuren 9 und 10 gezeigt über eine Platte mit der Einspannmechanik 11 in Verbindung stehen oder sie kann direkt an der Einspannmechanik 11 angeordnet sein.

## Patentansprüche

1. Vorrichtung (1) zum Bearbeiten eines Werkstücks (2, 13) mit einem Roboter (3), der einen Arm (4) aufweist, wobei der Roboter das Werkstück (2, 13) hält und bewegt, der Roboter (3) eine Antriebseinheit (7, 19) aufweist, die dazu geeignet ist, das Werkstück (2) in einer Spannvorrichtung (12) zu befestigen, ***dadurch gekennzeichnet, dass*** an dem Arm (4) des Roboters (3) gleichzeitig eine Antriebseinheit (7, 19) und mindestens ein Greifer (5, 6) angeordnet sind, um sie nacheinander zu benutzen, mindestens ein Greifer (5, 6) seitlich der Antriebseinheit (7, 19) angeordnet ist und Greifer (5, 6) und Antriebseinheit (7, 19) orthogonal zueinander angeordnet sind, wobei die Antriebseinheit jeweils auf einer Seite eines Schraubwerkzeugs (9) Stifte (20, 21) aufweist, die so ausgebildet sind, dass sie mit Bohrungen (22, 23) an der Spannvorrichtung (12) fluchtend angeordnet werden können, oder in der Antriebseinheit (7, 19) Bohrungen vorgesehen sind, die mit Stiften in der Spannvorrichtung (12) zusammenwirken, sodass die Stifte (20, 21) in die Bohrungen (22, 23) gleiten und die Antriebseinheit (19) relativ zur Spannvorrichtung (12) festhalten, um den Roboterarm zu entlasten.

2. Vorrichtung nach Anspruch 1,
***dadurch gekennzeichnet, dass*** die Antriebseinheit (7, 19) ein Schraubwerkzeug (8) mit einem Adapter (9) mit einem Adapterprofil (24, 25, 26) aufweist, und eine Feder (27) zwischen Adapter (9) und Antriebseinheit (7) vorgesehen ist, die es ermöglicht, dass bei einer geringen Bewegung des Adapters (9) relativ zu einem entsprechenden Profil an der Spannvorrichtung der Adapter (9) mit dem Profil an der Spannvorrichtung in Eingriff gerät, wobei sich die Feder (27), die den Adapter (9) zum Profil an der Spannvorrichtung drückt, entspannt.

3. Anordnung aus einer Vorrichtung nach einem der vorhergehenden Ansprüche und einer Spannvorrichtung (12), ***dadurch gekennzeichnet, dass*** die Spannvorrichtung (12) mechanisch ohne Antrieb ausgebildet ist und die Spannvorrichtung (12) und ein unbewegtes Teil (20, 21) der Antriebseinheit (7, 19) formschlüssig miteinander in Verbindung stehen.

4. Anordnung nach Anspruch 3, ***dadurch gekennzeichnet, dass*** die Spannvorrichtung (12) mehrere Werkstücke (2, 13) aufnimmt, die zusammen eingespannt sind.

5. Anordnung nach Anspruch 3 oder 4, ***dadurch gekennzeichnet, dass*** die Spannvorrichtung (12) und ein bewegtes Teil (9) der Antriebseinheit (7, 19) formschlüssig miteinander in Verbindung stehen.

6. Verfahren zum Bearbeiten eines Werkstücks mit einer Anordnung nach einem der vorhergehenden Ansprüche, bei dem das Werkstück durch den Roboter (3) in der Spannvorrichtung (12) abgelegt und anschließend bearbeitet wird, ***dadurch gekennzeichnet, dass*** das Werkstück (2, 13) mit dem Roboter (3) in der Spannvorrichtung (12) befestigt wird.

7. Verfahren nach Anspruch 6, ***dadurch gekennzeichnet, dass*** das Werkstück (2, 13) mit dem Roboter (3) aus der Spannvorrichtung (12) gelöst wird.

## Claims

1. A device (1) for machining a workpiece (2, 13), comprising a robot (3) which has an arm (4), wherein the robot holds and moves the workpiece (2, 13), wherein the robot (3) has a drive unit (7, 19) which is suitable for fastening the workpiece (2) in a clamping device (12), ***characterized in that*** a drive unit (7, 19) and at least one gripper (5, 6) are arranged simultaneously on the arm (4) of the robot (3) in order to use the drive unit and the at least one gripper one after the other, wherein at least one gripper (5, 6) is arranged laterally to the drive unit (7, 19), and wherein the gripper (5, 6) and the drive unit (7, 19) are arranged orthogonally to one another, wherein the drive unit has pins (20, 21) in each case on one side of a screwing tool (9), the pins being configured such that the pins can be aligned flush with bores (22, 23) on the clamping device (12), or bores are provided in the drive unit (7, 19) which bores cooperate with pins in the clamping device (12) such that the pins (20, 21) slide into the bores (22, 23) and hold the drive unit (19) firmly relative to the clamping device (12) in order to relieve the stress on the robot arm.

2. The device according to claim 1, ***characterized in that*** the drive unit (7, 19) has a screwing tool (8) with an adapter (9) having an adapter profile (24, 25, 26), and a spring (27) is provided between the adapter (9) and the drive unit (7), which spring enables the adapter (9) to enter into engagement with the profile on the clamping device with a small movement of the adapter (9) relative to a corresponding profile on the clamping device, wherein the tension on the spring (27) which presses the adapter (9) towards the profile of the clamping device is released.

3. An arrangement consisting of a device according to any one of the preceding claims and a clamping device (12), ***characterized in that*** the clamping device (12) is mechanically configured without a drive and the clamping device (12) and a stationary part (20, 21) of the drive unit (7, 19) are positively connected to one another.

4. The arrangement according to claim 3, ***characterized in that*** the clamping device (12) receives a plurality of workpieces (2, 13) which are clamped together.

5. The arrangement according to claim 3 or 4, ***characterized in that*** the clamping device (12) and a moving part (9) of the drive unit (7, 19) are positively connected to one another.

6. A method for machining a workpiece using an arrangement according to any one of the preceding claims, in which the workpiece is placed in the clamping device (12) by means of the robot (3) and is then machined, ***characterized in that*** the workpiece (2, 13) is secured in the clamping device (12) using the robot (3).

7. The method according to claim 6, ***characterized in that*** the workpiece (2, 13) is released from the clamping device (12) by means of the robot (3).

## Revendications

1. Dispositif (1) pour l'usinage d'une pièce (2, 13) comportant un robot (3) qui présente un bras (4), le robot maintenant et faisant bouger la pièce (2, 13), le robot (3) présentant une unité d'entraînement (7, 19) qui est apte à fixer la pièce (2) dans un dispositif de serrage (12), ***caractérisé en ce que,*** au niveau du bras (4) du robot (3), une unité d'entraînement (7, 19) et au moins un préhenseur (5, 6) sont en même temps disposés pour les utiliser l'un après l'autre, qu'au moins un préhenseur (5, 6) est disposé sur le côté de l'unité d'entraînement (7, 19) et que le préhenseur (5, 6) et l'unité d'entraînement (7, 19) sont disposés orthogonalement l'un par rapport à l'autre, l'unité d'entraînement présentant respectivement, sur une face d'un outil de vissage (9), des goupilles (20, 21) qui sont conçues pour pouvoir être disposées alignées avec des alésages (22, 23) du dispositif de serrage (12), ou qu'il est prévu dans l'unité d'entraînement (7, 19) des alésages qui interagissent avec des goupilles dans le dispositif de serrage (12), de sorte que les goupilles (20, 21) coulissent dans les alésages (22, 23) et maintiennent l'unité d'entraînement (19) par rapport au dispositif de serrage (12) afin de décharger le bras de robot.

2. Dispositif selon la revendication 1, ***caractérisé en ce que*** l'unité d'entraînement (7, 19) présente un outil de vissage (8) doté d'un adaptateur (9) avec un profilé adaptateur (24, 25, 26), et qu'un ressort (27) est prévu entre l'adaptateur (9) et l'unité d'entraînement (7), lequel ressort permet que, dans le cas d'un léger mouvement de l'adaptateur (9) par rapport à un profilé correspondant au niveau du dispositif de serrage, l'adaptateur (9) vienne en prise avec le profilé au niveau du dispositif de serrage, le ressort (27) qui comprime l'adaptateur (9) contre le profilé au niveau du dispositif de serrage se détendant.

3. Système composé d'un dispositif selon une des revendications précédentes et un dispositif de serrage (12), ***caractérisé en ce que*** le dispositif de serrage (12) est conçu mécaniquement sans entraînement et que le dispositif de serrage (12) et une pièce qui ne bouge pas (20, 21) de l'unité d'entraînement (7, 19) sont en liaison géométrique l'un avec l'autre.

4. Dispositif selon la revendication 3, ***caractérisé en ce que*** le dispositif de serrage (12) reçoit plusieurs pièces (2, 13) qui sont serrées ensemble.

5. Dispositif selon la revendication 3 ou 4, ***caractérisé en ce que*** le dispositif de serrage (12) et une pièce mouvement (9) de l'unité d'entraînement (7, 19) sont en liaison géométrique l'un avec l'autre.

6. Procédé d'usinage d'une pièce avec un dispositif selon une des revendications précédentes, dans lequel la pièce est déposée par le robot (3) dans le dispositif de serrage (12) et est ensuite usinée, ***caractérisé en ce que*** la pièce (2, 13) est fixée au robot (3) dans le dispositif de serrage (12).

7. Procédé selon la revendication 6, ***caractérisé en ce que*** la pièce (2, 13) est détachée du dispositif de serrage (12) avec le robot (3).
